## Europäisches Patentamt
## European Patent Office
## Office européen des brevets

(19)

(11) Veröffentlichungsnummer : **0 198 402**
**B1**

(12)

# EUROPÄISCHE PATENTSCHRIFT

(45) Veröffentlichungstag der Patentschrift :
09.11.88

(51) Int. Cl.⁴ : **B 65 G   1/137**

(21) Anmeldenummer : 86104819.7

(22) Anmeldetag : 09.04.86

(54) **Lager mit vollautomatischer Ein- und Auslagerung von Lagerartikeln.**

(30) Priorität : 18.04.85 DE 3513959

(43) Veröffentlichungstag der Anmeldung :
22.10.86 Patentblatt 86/43

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
US-A- 4 219 296

(73) Patentinhaber : **Fried. Krupp Gesellschaft mit beschränkter Haftung
Altendorfer Strasse 103
D-4300 Essen 1 (DE)**

(72) Erfinder : **Wirges, Heribert
Malerstrasse 37
D-2800 Bremen 1 (DE)**

## Beschreibung

Die Erfindung betrifft ein Lager mit vollautomatischer Ein- und Auslagerung von Lagerartikeln der im Oberbegriff des Anspruchs 1 definierten Gattung.

Bei einem bekannten Lager dieser Art werden alle Lagerbewegungen von einem Lagerverwaltungsrechner zentral gesteuert, wobei sowohl die Einlagerung als auch die Auslagerung von Lagerartikeln unter Optimierungsgesichtspunkten erfolgt. Zum Beispiel ermittelt die einen Teil des Lagerverwaltungsrechners bildende Adressiereinrichtung die optimale Lagerplatzadresse für eine einen oder mehrere Lagerartikel aufnehmende mobile Lagereinheit unter den Gesichtspunkten der Artikelbeschaffenheit, der kurzen Fahrzeit der Lagermaschine und der Vermeidung der Einlagerung gleicher Artikel in der gleichen Lagerplatzgasse. Diese optimierte Lagerplatzadresse wird der jeweiligen Lagereinheit zugewiesen und gleichzeitig der Steuervorrichtung für die Lagermaschine mitgeteilt. Die adressierte Lagereinheit wird dann an einer Eintrittsstelle von einer Bedienungsperson an ein taktgesteuertes Transportbandsystem aus mehreren Teilbändern übergeben und von diesem einer der Lagermaschinen zugeführt. Die Lagermaschine legt dann die Lagereinheit entsprechend der Adressenvorgabe in der Steuervorrichtung an dem adressierten Lagerplatz ab.

Durch die Komplexität dieses Verwaltungs- und Transportsystems mit seinen zahlreichen Schnittstellen ist es möglich, daß eine Diskrepanz zwischen dem im Lagerverwaltungssystem abgespeicherten Lagerplatz eines Lagerartikels und dem tatsächlichen physischen Lagerplatz entsteht. Solche Fehler können durch Bedienfehler (Vertauschen zweier Lagereinheiten an der Eintrittsstelle), durch unsachgemäße Reaktion auf Fehlermeldungen, durch Steuerfehler in den Transportsystemen selbst etc. hervorgerufen werden. Solche Fehler bewirken eine partielle Falschbelegung des Lagers, was langfristig zu einem totalen Zusammenbruch des gesamten Lagerverwaltungssystems führen kann.

Der Erfindung liegt die Aufgabe zugrunde, in einem Lager der eingangs genannten Art Maßnahmen zu treffen, die eine Erkennung der beschriebenen Fehler bereits bei der Einlagerung sicherstellen, so daß diese frühzeitig erkannt und korrigiert werden können.

Die Aufgabe ist bei einem Lager der im Oberbegriff des Anspruchs 1 angegebenen Gattung durch die Merkmale im Kennzeichenteil des Anspruchs 1 gelöst.

Das erfindungsgemäße Lager hat den Vorteil, daß aufgrund der den mobilen Lagereinheiten zugeordneten individuellen Identifikationscodes mittels der Identifikations-Lesevorrichtung außerhalb der Lagerbearbeitungszeit, z. B. in den Nachtstunden, ein Istbestand der eingelagerten Lagereinheiten in Zuordnung zu den Lagerplätzen aufgenommen werden kann. Dieser Istbestand wird in der Vergleichseinheit mit dem vom Lagerverwaltungsrechner durch Adressenzuweisung und Identifikationscode-Vergabe erstellten Lagersollbestand verglichen und somit Fehleinlagerungen von Lagereinheiten unmittelbar festgestellt. Diese Fehleinlagerungen können — da es sich meist nur um wenige handelt — problemlos, z. B. durch Auslagerung und Neuidentifikation, beseitigt werden.

Bei dem erfindungsgemäßen Lager ist somit eine laufende Kontrolle des gesamten Lagersystems, also sowohl der Lagerverwaltung als auch der Lagermechanik mit Steuersystemen, möglich. Alle Fehler, die sich bei der Einlagerung von Lagerartikeln an irgendeiner Schnittstelle eingeschlichen haben, werden spätestens bei der mit der erfindungsgemäßen Identifikationscode-Lesevorrichtung durchgeführten Lagerbestandskontrolle vollständig erfaßt. Das erfindungsgemäße Lager zeichnet sich somit durch eine extrem hohe Verwaltungs- und Zugriffssicherheit aus. Insbesondere werden Fehler in der Lagerbelegung bereits in der Füllphase des Lagers erkannt, so daß bei Aufnahme des Lagerbetriebs ein zuverlässig richtig belegtes Lager zur Verfügung steht.

Eine vorteilhafte Ausführungsform der Erfindung ergibt sich aus Anspruch 2. Durch Ausnutzen der in gleicher Weise steuerbaren Lagermaschine kann ein separates Antriebs- und Steuergetriebe für die Identifikationscode-Lesevorrichtung eingespart werden. Die Lesevorrichtung kann dabei an der Lagermaschine fest installiert sein. Bei mehreren Lagermaschinen, von denen jeweils eine einer Lagerplatzgasse zugeordnet ist und die dort liegenden Lagerplätze bedient, ist es zweckmäßig, die Lesevorrichtung wie eine Lagereinheit auf die Lagermaschine aufzusetzen, so daß auch bei mehreren Lagermaschinen nur eine Lesevorrichtung erforderlich ist. Die Lesevorrichtung kann dabei von Hand auf- oder umgesetzt werden. Möglich ist aber auch eine automatische Einsteuerung der Lesevorrichtung über das Transportbandsystem, was in nahezu identischer Weise wie die Einsteuerung einer mobilen Lagereinheit erfolgen kann.

Die Erfindung ist anhand von in der Zeichnung dargestellten Ausführungsbeispielen im folgenden näher beschrieben.

Es zeigen jeweils in schematischer Darstellung :

Fig. 1 eine Draufsicht eines Lagers mit zentralem Lagerverwaltungsrechner und Identifikationsvorrichtung im Blockschaltbild,

Fig. 2 eine Draufsicht einer Lagermaschine mit aufgesetztem Gehäuse und darin installierter Identifikationscode-Lesevorrichtung, Speicher und Steuereinheit.

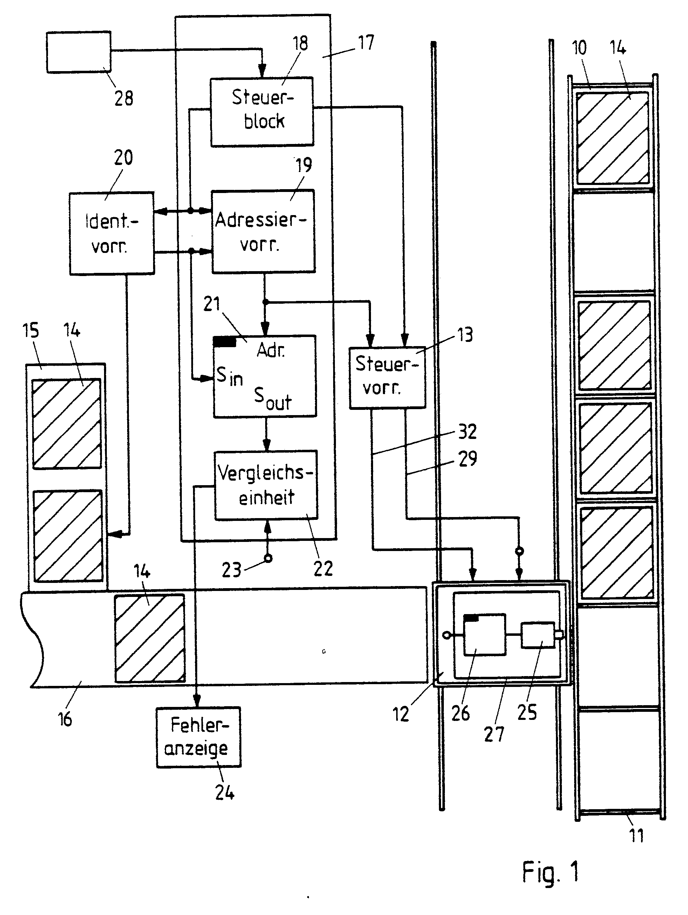

Das in Fig. 1 schematisch dargestellte Lager weist eine Vielzahl von Lagerplätzen 10 auf, die zu einem Hochregal 11 zusammengesetzt sind. Jeder Lagerplatz 10 ist durch eine fest zugeordnete Lagerplatzadresse eindeutig definiert. Vor dem Hochregal 11 ist eine Lagermaschine 12 installiert, die in Horizontal- und Vertikalrichtung verfahrbar ist und einen nicht dargestellten Greifer zum Einfahren in die einzelnen Lagerplätze 10 trägt. Die Lagermaschine 12 wird von einer mit ihr über eine Steuerleitung 32 verbundene Steuervorrichtung 13 derart gesteuert, daß sie aufgrund von Lagerplatzadressen-Vorgaben den jeweiligen Lagerplatz 10 mit übereinstimmender Lagerplatzadresse aufsucht und dort auf einen entsprechenden Steuerbefehl hin eine Ein- oder Auslagerung einer Lagereinheit 14 mittels ihres Greifers vornimmt.

An jedem Lagerplatz 10 kann maximal eine mobile Lagereinheit 14 eingelagert werden. Die mobilen Lagereinheiten 14 können als Behälter, Paletten oder sonstige Aufnahmebehältnisse ausgebildet sein. Alle Lagereinheiten 14 weisen gleiche Abmessungen auf. In jeder Lagereinheit 14 kann eine unterschiedliche Anzahl von Lagerartikeln, je nach deren Größe, eingelegt werden. Zur Einbringung von Lagerartikeln in das Lager werden die Lagerartikel in Lagereinheiten 14 eingelegt und die Lagereinheiten 14 an einer Eintrittsstelle 15 — auch I-Punkt des Lagers genannt — einem Transportband 16 übergeben, das seinerseits die Lagereinheiten 14 der Lagermaschine 12 zuführt. Diese nimmt mit ihrem Greifer die jeweilige Lagereinheit 14 vom Transportband 16 und legt diese in dem vorgegebenen Lagerplatz 10 im Hochregal 11 ab. Üblicherweise sind im Lager eine Vielzahl von Hochregalen 11 und eine Mehrzahl von Lagermaschinen 12 vorhanden, wobei jeweils eine Lagermaschine 12 in einer Gasse zwischen zwei Hochregalen 11 verfahrbar ist und diese beiden Hochregale 11 bedient. Das Transportband 16 ist dann Teil eines taktgesteuerten Bandsystems.

Die gesamte Steuerung des Lagers wird von einem zentralen Lagerverwaltungsrechner 17 durchgeführt, der nur in dem hier interessierenden Umfang im Blockschaltbild dargestellt ist. Wesentlicher Teil des Rechners 17 ist neben einem Steuerblock 18 zur Auslösung der einzelnen Steuerbefehle eine Adressiereinrichtung 19, welche einer an der Eintrittsstelle 15 des Lagers einzuschiebenden Lagereinheit 14 eine Lagerplatzadresse im Hochregal 11 zuweist. Diese Lagerplatzadresse wird aufgrund der vorhandenen Lagerbelegung unter Optimierungsgesichtspunkten, wie Beschaffenheit der in der Lagereinheit enthaltenen Artikel, kurzen Transportwege, Zugriffssicherheit etc. ausgewählt und der Steuervorrichtung 13 mitgeteilt.

Die Adressiereinrichtung 19 arbeitet mit einer Identifikationsvorrichtung 20 zusammen, mittels welcher die beladenen Lagereinheiten 14 an der Eintrittsstelle 15 vor Übergabe an das Transportband 16 identifiziert werden. Die Identifikationsvorrichtung 20 gibt dabei entweder einen Identifikationscode aus, der z. B. als maschinell lesbarer Aufkleber an der Lagereinheit 14 befestigt wird, oder identifiziert eine bereits mit einem solchen Identifikationscode versehene Lagereinheit 14. In beiden Fällen wird der vorgegebene oder ausgelesene Identifikationscode von der Identifikationsvorrichtung 20 ausgegeben und einerseits der Adressiereinrichtung 19 zur Optimierung der Lagerplatzadressenzuweisung und andererseits einem ersten Speicher 21 zugeführt. Dieser Speicher 21 ist außerdem mit der Adressiereinrichtung 19 verbunden, wodurch diesem auch die der identifizierten Lagereinheit 14 zugewiesene Lagerplatzadresse zugeführt wird. Im Speicher 21 werden damit die Identifikationscodes aller in das Hochregal 11 eingelagerten Lagereinheiten 14 in Zuordnung zu den zugewiesenen Lagerplatzadressen abgespeichert. Der Datenausgang des ersten Speichers 21 ist mit einem ersten Eingang einer Vergleichseinheit 22 verbunden, deren zweiter Eingang aus dem Rechner 17 herausgeführt und als Anschlußbuchse 23 ausgebildet ist. Der Ausgang der Vergleichseinheit 22 ist mit einer Fehleranzeige 24 verbunden.

Dem Hochregal 11 mit seinen Lagerplätzen 10 ist eine Identifikationscode-Lesevorrichtung 25 zugeordnet, die unabhängig von der Adressiereinrichtung 19 derart steuerbar ist, daß sie ausgehend von einem vorgegebenen Lagerplatz 10 alle weiteren Lagerplätze in vorgegebener Reihenfolge aufsucht und jeweils die Identitätscodes der in den Lagerplätzen 10 eingelagerten Lagereinheiten 14 ausliest. Zweckmäßigerweise wird dabei als Ausgangspunkt für die Steuerbewegung der Lesevorrichtung 25 der äußerste Lagerplatz 10 in der untersten oder obersten Regalreihe gewählt und die Lesevorrichtung 25 in einer nach den Gesichtspunkten der kürzesten Wegstrecke vorgegebenen Reihenfolge von Lagerplatz 10 zu Lagerplatz 10 gesteuert. Die an den einzelnen Lagerplätzen 10 durch die Lesevorrichtung 25 von den dort eingelagerten Lagereinheiten 14 abgelesenen Identifikationscodes werden in einem mit der Lesevorrichtung 25 verbundenen zweiten Speicher 26 in Zuordnung zu den Lagerplätzen abgespeichert. Nach kompletter Abtastung aller Lagerplätze 10 wird der Ausgang des zweiten Speichers 26 mit der Anschlußbuchse 23 der Vergleichseinheit 22 verbunden. Die Vergleichseinheit 22 vergleicht nunmehr die Identifikationscodes gleicher Lagerplatzzuordnungen in den beiden Speichern 21, 26. Stimmen diese nicht überein, so ist eine Fehl- oder Falschbelegung vorhanden. Die Vergleichseinheit 22 steuert dann die Fehleranzeige 24 an, und diese weist die Falschbelegung sichtbar aus.

Durch die beschriebene Aufnahme des tatsächlichen Istbestandes an Lagereinheiten 14 in Zuordnung zu den Lagerplätzen 10 mit Hilfe der Identifikationscode-Lesevorrichtung 25 und durch den anschließenden Vergleich des Istbestandes mit dem an der Eintrittsstelle 15 des Lagers vorgegebenen Sollbestand mit Hilfe der Vergleichseinheit 25 wird jeder Einlagerungsfehler, unabhängig wodurch und an welcher Stelle er bewirkt worden ist, sofort festgestellt. Damit werden Fehler im Gesamtsystem bereits beim Füllen des Lagers erkennbar und nicht erst im späteren Betrieb aufgrund von Auslagerungen bzw. Rücklagerungen der Lagereinheiten 14. Diese beschriebene Lagerkontrolle wird zweckmäßigerweise in Zeitintervallen durchgeführt, in denen keine Lagerbewegungen erfolgen, also z. B. in den Nachtstunden.

Wie in Fig. 1 schematisch angedeutet ist, ist es aus Kostengründen zweckmäßig, die Identifikationscode-Lesevorrichtung 25 und den zweiten Speicher 26 in einem Gehäuse 27 unterzubringen und dieses als mobiles Teil auf die Lagermaschine 12 manuell oder automatisch aufzusetzen. Die Steuerung der Lesevorrichtung 25 in der beschriebenen Weise von Lagerplatz 10 zu Lagerplatz 10 erfolgt dann durch entsprechende Steuerung der Lagermaschine 12. Zur Auslösung des beschriebenen Lagerbestandskontrollvorgangs ist eine Taste 28 « Lagerkontrolle » manuell zu betätigen. Der Steuerblock 18 löst dann das vorgegebene Steuerprogramm aus, bei welchem über die Steuervorrichtung 13 und eine zweite Steuerleitung 29 zur Lagermaschine 12 letztere einen Lagerplatz 10 aufsucht, z. B. den äußersten oberen Lagerplatz im Hochregal 11, und dann schrittweise den jeweils benachbarten Lagerplatz 10 ansteuert. Die erste Steuerleitung 32 für die Adressensteuerung zwischen Steuervorrichtung 13 und Lagermaschine 12 ist dann gesperrt. Die Identifikationscode-Lesevorrichtung 25 ist dabei auf der Lagermaschine 12 so positioniert, daß sie in jeder Lagerplatzposition der Lagermaschine 12 den Identifikationscode einer im Lagerplatz 12 evtl. eingelagerten Lagereinheit 14 abzulesen vermag. Die gelesenen Identifikationscodes werden in dem zweiten Speicher 26, wie beschrieben, abgespeichert. Die Reihenfolge der Abspeicherung entspricht der Reihenfolge der angesteuerten Lagerplätze 10 im Hochregallager 11, so daß eine eindeutige Identifikationscode-Lagerplatz-Zuordnung gewährleistet ist.

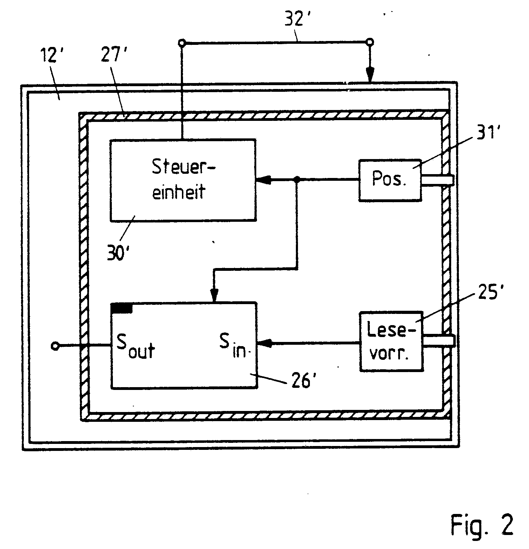

In dem in Fig. 2 dargestellten weiteren Ausführungsbeispiel ist in dem Gehäuse 27' noch eine separate Steuereinheit 30' zur Steuerung der Lagermaschine 12' während der Lagerkontrollphase vorgesehen. In diesem Fall wird die Steuerleitung 32' der Lagermaschine 12' zu der Steuervorrichtung 13 getrennt und an die Steuereinheit 30' angeschlossen. Die Steuereinheit 30' steuert die Lagermaschine 12' in der gleiche Weise wie vorstehend beschrieben.

Zur Erhöhung der Aufzeichnungssicherheit beim Lagerkontrollvorgang ist in dem Gehäuse 27' noch ein Positionsmelder 31' angeordnet, der eine exakte Position der Lagermaschine 12' an den einzelnen Lagerplätzen 12 detektiert und einen Rückmeldeimpuls an die Steuereinheit 30' und ggf. einen Einschreibbefehl an den zweiten Speicher 26' gibt. Ein solcher Positionsmelder 31' kann z. B. als fotoelektrischer Abtaster ausgebildet sein, der mit Reflexionsflächen am Hochregal 11, die jeweils einem Lagerplatz 10 räumlich zugeordnet sind, zusammenwirkt. Als Reflexionsflächen können z. B. die vertikalen Regalstreben des Hochregals 11 Verwendung finden.

Wie eingangs erwähnt, werden üblicherweise von einer Lagermaschine Lagerplätze bedient, die beiderseits einer Lagergasse zu einander gegenüberliegenden Hochregalen zusammengestellt sind. Um hier die Zeit für die Lagerbestandskontrolle zu verkürzen, werden in diesem Fall die Identifikationscode-Lesevorrichtung und der mit dieser verbundene zweiter Speicher dupliziert, so daß bei jeder Positionierung der Lagermaschine während des Lagerbestandskontrollvorgang gleichzeitig an zwei zueinander gegenüberliegenden Lagerplätzen die Identifikationscodes eingelagerter Lagereinheiten getrennt eingelesen und abgespeichert werden.

**Patentansprüche**

1. Lager mit vollautomatischer Ein- und Auslagerung von Lagerartikeln, das aufweist : eine Vielzahl von vorzugsweise in einem Hochregal (11) angeordneten Lagerplätzen (10) mit jeweils einer zugeordneten Lagerplatzadresse, eine Vielzahl von mobilen Lagereinheiten (14), wie Behälter, Paletten od. dgl., zum Aufnehmen von mindestens einem Lagerartikel, mindestens eine Lagermaschine (12) zum Transport der Lagereinheiten (14) in die oder aus den Lagerplätzen, eine Adressiereinrichtung (19) zur Zuweisung jeweils einer Lagerplatzadresse zu einer Lagereinheit (14) und eine mit der Adressiereinrichtung (19) verbundene Steuervorrichtung zum Steuern der Lagermaschine (12) entsprechend der jeweiligen Lagerplatzadresse, gekennzeichnet durch eine Identifikationsvorrichtung (20), die jede Lagereinheit (14) mit einem Identifikationscode versieht oder eine mit einem Identifikationscode versehene Lagereinheit identifiziert und den der Lagereinheit zugeordneten Identifikationscode ausgibt, einen mit der Adressiereinrichtung (19) und mit der Identifikationsvorrichtung (20) verbundenen ersten Speicher (21) zur Speicherung der Identifikationscodes in Zuordnung zu den zugewiesenen Lagerplatzadressen, eine den Lagerplätzen (10) zugeordnete Identifikationscode-Lesevorrichtung (25 ; 25') die derart steuerbar ist, daß sie in vorgebbarer Reihenfolge die Lagerplätze (10) aufsucht und die Identifikationscodes der eingelagerten Lagereinheiten (14) ausliest, einen mit der Identifikationscode-Lesevorrichtung (25 ; 25') verbundenen zweiten Speicher (26 ; 26') zum lagerplatzzugeordneten Abspeichern der ausgelesenen Identifikationscodes und eine mit dem ersten und zweiten Speicher (21, 26 ; 26') verbundene Vergleichseinheit (22), welche die Identifikationscodes gleicher Lagerplatzzuordnung in beiden Speichern (22, 26 ; 26') auf Übereinstimmung prüft und bei Nichtübereinstimmung eine Fehlermeldung ausgibt.

2. Lager nach Anspruch 1, dadurch gekennzeichnet, daß die Identifikationscode-Lesevorrichtung (25 ; 25') auf der Lagermaschine (12 ; 12') derart positioniert ist, daß sie in jeder Lagerplatzposition der Lagermaschine (12 ; 12') den Identifikationscode einer im Lagerplatz (10) eingelagerten Lagereinheit (14) abzulesen vermag, und daß die Steuerung der Identifikationscode-Lesevorrichtung (25 ; 25') durch entsprechende Steuerung der Lagermaschine (12 ; 12') ersetzt ist.

3. Lager nach Anspruch 2, dadurch gekennzeichnet, daß zur Steuerung der Lagermaschine (12) während einer zeitlich begrenzten Lagerkontrollphase die Steuervorrichtung (13) in eine separate Steuerphase umschaltbar ist.

4. Lager nach Anspruch 2, dadurch gekennzeichnet, daß zur Steuerung der Lagermaschine (12') in einer zeitlich begrenzten Lagerkontrollphase eine separate Steuereinheit (30') vorgesehen ist, die bei gleichzeitiger Stillsetzung der Steuervorrichtung (13) einschaltbar ist.

5. Lager nach Anspruch 4 oder 5, dadurch gekennzeichnet, daß die Identifikationscode-Lesevorrichtung (25 ; 25'), der zweite Speicher (26 ; 26') und ggf. die Steuereinheit (30') in einem mobilen Gehäuse (27 ; 27') installiert sind.

**Claims**

1. A storehouse with all-automatic supply and removal of goods, which has a plurality of storage places (10) preferably disposed in a high shelf (11) and each having an associated storage place address ; a plurality of mobile storage units (14), such as containers, pallets or the like, for receiving at least one stored article ; at least one storehouse machine (12) for transporting the storage units (14) into or out of the storage places ; an addressing device (19) for assigning each storage place address to a storage unit (14) ; and a control device connected to the addressing device (19) for controlling the storehouse machine (12) in accordance with the particular storage place address, characterized by an identification device (20) which provides each storage unit (14) with an identification code or identifies a storage unit provided with an identification code and outputs the identification code assigned to the storage unit ; a first store (21) connected to the addressing device (19) and the identification device (20) to store the identification code in association with the assigned storage place addresses ; an identification code read device (25 ; 25') which is associated with the storage places (10) and can be so controlled that it hunts for the storage places (10) in a given sequence and reads out the identification codes of the stored storage units (14) ; a second store (26 ; 26') connected to the identification code read device (25 ; 25') for storing in accordance with the storage places the identification codes read out ; and a comparison unit (22) which is connected to the first and second stores (21, 26 ; 26'), checks the identification codes of the same storage place association in both stores (22, 26 ; 26') for agreement and outputs an error message in case of non-agreement.

2. A storehouse according to claim 1, characterized in that the identification code read device (25 ; 25') is so positioned on the storehouse machine (12 ; 12') that it can read the identification code of a storage unit (14) stored in the storage place (10) in any storage place position of the storehouse machine (12 ; 12'), and the control of the identification code read device (25 ; 25') is replaced by corresponding control of the storehouse machine (12 ; 12').

3. A storehouse according to claim 2, characterized in that the control device (13) can be switched over into a separate control phase to control the storehouse machine (12) during a store checking phase limited in time.

4. A storehouse according to claim 2, characterized in that a separate control unit (30') is provided which can be switched on with the simultaneous stoppage of the control device (13), to control the storehouse machine (12') during a storage checking phase limited in time.

5. A storehouse according to claims 4 or 5 (sic), characterized in that the identification code read device (25 ; 25'), the second store (26 ; 26') and if necessary the control unit (30') are installed in a moveable casing (27 ; 27').

**Revendications**

1. Magasin à stockage et déstockage entièrement automatiques d'articles à stocker, comportant : une pluralité d'emplacements de stockage (10) disposés de préférence dans un rayonnage en hauteur (11), avec chacun une adresse d'emplacement qui lui est affectée, une pluralité d'unités de stockage (14) mobiles telles que récipients, palettes ou similaires destinés à recevoir au moins un article à stocker, au moins une machine de stockage (12) pour le transport des unités de stockage (14) dans ou à partir des emplacements de stockage, un dispositif d'adressage (19) pour l'affectation d'une adresse d'emplacement à une unité de stockage (14) et un dispositif de commande relié au dispositif d'adressage (19) permettant de commander la machine de stockage (12) conformément à l'adresse de l'emplacement de stockage correspondante, caractérisé par un dispositif d'identification (20) qui pourvoit chaque unité de stockage (14) d'un code d'identification ou identifie une unité de stockage pourvue d'un code d'identification, et délivre un code d'identification attribué à l'unité de stockage, par une première mémoire (21), reliée au dispositif d'adressage (19) et au dispositif d'identification (20), permettant de mettre en mémoire les codes d'identification en relation avec les adresses d'emplacement de stockage attribuées, par un dispositif de lecture du code d'identification (25 ; 25') associé aux emplacements de stockage (10), qui peut être commandé de manière à rechercher les emplacements (10) et à lire les codes d'identification des unités de stockage (14) stockées, suivant un ordre donné, par une deuxième mémoire (26 ; 26') reliée au dispositif de lecture du code d'identification (25 ; 25'), pour la mise en mémoire en relation avec l'emplacement de stockage des codes d'identification lus, ainsi que par une unité de comparaison (22) reliée à la première et à la deuxième mémoire (21, 26 ; 26'), qui vérifie la concordance des codes d'identification d'une même affectation d'emplacement dans les deux mémoires (22, 26 ; 26'), et qui délivre un signal d'erreur en cas de non-concordance.

2. Magasin selon la revendication 1, caractérisé en ce que le dispositif de lecture du code d'identification (25 ; 25') est positionné sur la machine de stockage (12 ; 12') de manière que dans chaque position d'emplacement de la machine de stockage (12 ; 12'), il est en mesure de lire le code d'identification d'une unité de stockage (14) stockée à l'emplacement (10), et en ce que la commande du dispositif de lecture d'identification (25 ; 25') est remplacée par une commande correspondante de la machine de stockage (12 ; 12').

3. Magasin selon la revendication 2, caractérisé en ce que pour commander la machine de stockage (12) pendant une phase de contrôle du stock limitée dans le temps, le dispositif de commande (13) peut être commuté dans une phase de commande séparée.

4. Magasin selon la revendication 2, caractérisé en ce que pour commander la machine de stockage (12') dans une phase de contrôle du stock limitée dans le temps, il est prévu une unité de commande (30') séparée qui peut être mise en service si simultanément le dispositif de commande (13) est mis à l'arrêt.

5. Magasin selon la revendication 4 ou 5, caractérisé en ce que le dispositif de lecture du code d'identification (25 ; 25'), la deuxième mémoire (26 ; 26') et éventuellement l'unité de commande (30') sont installés dans un coffret (27 ; 27') mobile.

Fig. 1

Fig. 2